Europäisches Patentamt

European Patent Office

Office européen des brevets

(11) Numéro de publication: **0 094 862**
**B1**

(12) **FASCICULE DE BREVET EUROPÉEN**

(45) Date de publication du fascicule du brevet:
13.08.86

(21) Numéro de dépôt: **83400887.2**

(22) Date de dépôt: **03.05.83**

(51) Int. Cl.⁴: **F 01 L 17/00,** F 01 L 23/00,
F 01 B 11/00, F 04 B 9/12,
F 01 L 21/04, B 60 S 1/06

(54) **Dispositif pneumatique d'actionnement de bras pivotant d'essuie-vitre et installation combinée d'essuie-phares/lave-phares utilisant un tel dispositif.**

(30) Priorité: **19.05.82 FR 8208797**

(43) Date de publication de la demande:
**23.11.83 Bulletin 83/47**

(45) Mention de la délivrance du brevet:
**13.08.86 Bulletin 86/33**

(84) Etats contractants désignés:
**DE GB IT SE**

(56) Documents cité:
**DE-A-2 148 192**
**DE-A-2 360 250**
**DE-C-808 413**
**FR-A-2 068 374**
**FR-A-2 325 820**
**FR-A-2 396 180**
**US-A-3 414 186**

(73) Titulaire: **BENDIX France, 126, rue de Stalingrad,
F-93700 Drancy (FR)**

(72) Inventeur: **Beneteau, Pierre, 10 rue des Aulnes,
F-93600 Aulnay S/S Bois (FR)**

(74) Mandataire: **Le Moenner, Gabriel, SERVICE
BREVETS BENDIX 44, Rue François 1er, F-75008
Paris (FR)**

LIBER, STOCKHOLM 1986

## Description

La présente invention concerne les installations d'essuyage et de lavage de surfaces vitrées de véhicule et, plus particulièrement, une installation combinée pneumatique d'essuie-phares/lave-phares.

Dans les véhicules automobiles actuels, les fonctions d'essuyage de phares et de lavage de phares sont habituellement réalisées à l'aide de deux moteurs électriques, l'un entraînant le bras du balai d'essuie-phares par l'intermédiaire d'un train d'engrenages, l'autre commandant la pompe de lave-phares, ce qui implique une multiplication des accessoires électriques et des moyens de commande afférents.

Dans le domaine des essuie-glaces, il a été envisagé l'utilisation d'une énergie pneumatique disponible, par exemple à partir d'un compresseur dont sont fréquemment pourvus actuellement les véhicules, par exemple pour réaliser une assistance au freinage.

Une telle technique fait l'objet du brevet français 2 190 080 qui décrit un système pneumatique de commande d'essuie-glaces à vérin double effet d'entraînement piloté par une soupape d'inversion associée à une soupape de commande à piston différentiel.

Le document DE-A-808 413 décrit un système pneumatique de commande de bras d'essuie-glace comportant également un vérin d'entraînement double effet à piston étagé renfermant un tiroir distributeur lui-même actionnable en tant que piston à double effet.

Il a d'autre part été envisagé, toujours dans le domaine du nettoyage de glace ou de pare-brise, un mécanisme d'actionnement de bras d'essuie-glace entraînant également un moyen de pompe de lave-glace. Une telle technique fait l'objet du brevet français 2 185 985 qui décrit l'association à un mécanisme d'entraînement d'essuie-glace classique à moteur électrique d'actionnement, d'un piston créant une surpression de chasse pour le liquide de lavage dans son réservoir pressurisé, une électrovanne étant interposée entre le réservoir et le gicleur.

Le document DE-A-2 360 250 décrit un système combiné pneumatique d'actionnement de bras d'essuie-glace et de lave-glace. Le système comprend un vérin d'actionnement double effet associé à une valve distributrice-inverseuse couplée aux pistons du vérin, et une pompe à entraînement pneumatique indépendante acheminant le liquide de lavage vers deux buses d'éjection en fonction de la pression régnant dans l'une ou l'autre des chambres du vérin d'actionnement.

La présente invention a pour objet de proposer une installation combinée pneumatique d'essuie-vitres/lave-vitres, utilisant un dispositif d'actionnement pneumatique simple et robuste couplé à une pompe aspirante-refoulante, selon un agencement particulièrement compact, robuste et fiable, et de faibles coûts de fabrication.

Pour ce faire, selon une caractéristique de l'invention, il est prévu une installation combinée d'essuie-vitres/lave-vitres comprenant un dispositif pneumatique d'actionnement de bras pivotant d'essuie-vitre, comprenant un moyen de vérin simple effet constitué d'une unité piston-cylindre, le piston se déplaçant contre l'action d'un ressort de rappel, le piston étant couplé au bras pivotant et au moyen de piston d'une pompe aspirante-refoulante de lave-vitres utilisant le même ressort de rappel pour engendrer l'aspiration bistable de commande d'alimentation, actionné par le déplacement de ce piston au moyen de vérin.

Le document FR-A-2 396 180 décrit par ailleurs un dispositif générateur d'un mouvement alternatif comprenant un moyen de vérin simple effet associé à un organe élastique de rappel et à un système distributeur bistable de commande d'alimentation actionné par le déplacement du moyen de vérin.

D'autres caractéristiques et avantages de la présente invention ressortiront de la description suivante de modes de réalisation, donnés à titre illustratif mais nullement limitatif, faite en relation avec les dessins annexés, sur lesquels:

- la Figure 1 est une vue en coupe longitudinale d'un dispositif pneumatique combiné d'actionnement de bras d'essuie-phare et de lave-phare selon l'invention, en position de début d'admission d'air et de refoulement d'eau;

- la Figure 2 est une vue analogue à celle de la Figure 1 du dispositif en position d'échappement d'air et de début d'admission d'eau;

- la Figure 3 est une vue en coupe transversale suivant la ligne III-III de la Figure 1;

- la Figure 4 est une vue schématique d'une installation combinée d'essuie-phares/lave-phares selon l'invention;

- la Figure 5 représente, en vue en coupe longitudinale, le dispositif de commande manuelle du distributeur de l'installation de la Figure 4;

- la Figure 6 est une vue en coupe longitudinal dudit distributeur en position de repos;

- la Figure 7 est une vue en coupe analogue à celle de la Figure 6 montrant le distributeur en position d'admission; et

- la Figure 8 est une vue en coupe suivant la ligne VIII-VIII de la Figure 7.

Sur les dessins et dans la description qui va suivre, les éléments identiques ou analogues sont représentés par les mêmes chiffres de références.

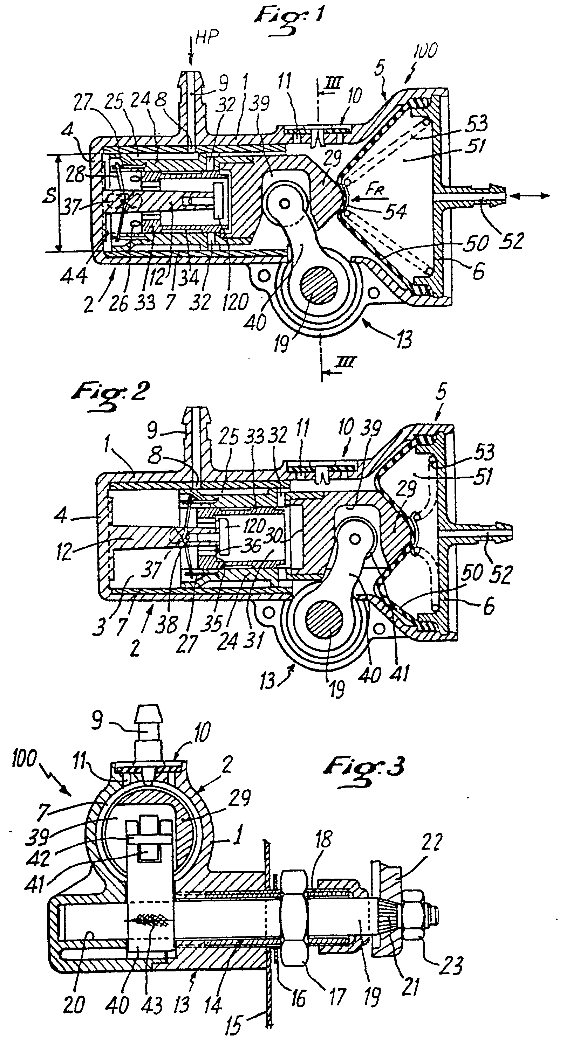

Le dispositif d'actionnement combiné représenté sur les Figures 1 à 3, généralement repéré par la référence 100, comprend un corps 1 formant un logement de vérin 2 délimitant une chambre interne cylindrique 3 fermée par une paroi d'extrémité frontale 4 du logement 2, et un logement de pompe 5 s'évasant dans la direction opposée à la paroi frontale 4 et fermé par un couvercle 6 réalisé, comme le corps 1, en matériau plastique.

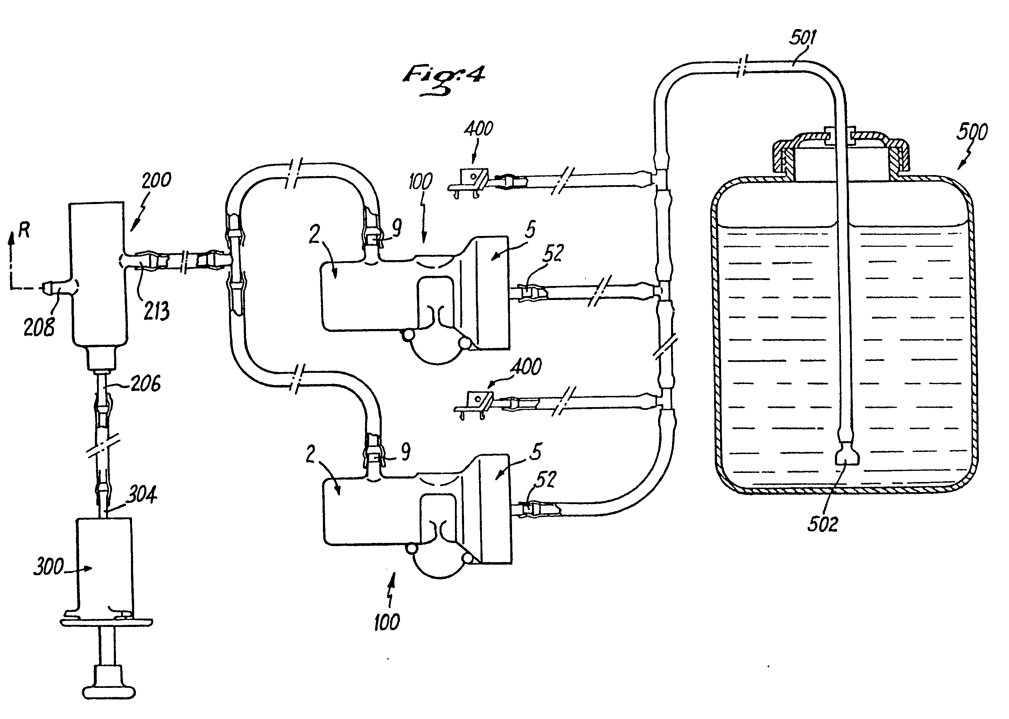

Dans la chambre 3 est disposé périphériquement une chemise tubulaire 7 sur laquelle est surmoulé le logement 2 et qui comporte un orifice radial 8 en prolongement d'une canalisation d'amenée d'air 9 formée d'une seule pièce avec le corps 1. Dans la paroi du corps 1, entre les logements 2 et 5, est monté un moyen de clapet 10, par exemple du type à disque ou membrane en élastomère, occultant sélectivement des orifices radiaux 11 établissant une communication entre l'intérieur du corps 1 et l'extérieur: A l'intérieur de la chambre 3 s'étend axialement un appendice central 12, formé d'une seule pièce avec la paroi de fond 4 et sur l'extrémité intérieure duquel est monté, également co-axialement, un disque de butée 120. Le corps 1 définit également une portée transversale 13 (Fig. 3) dans laquelle est montée une douille filetée 14 servant au montage du corps 1 sur tout support adéquat, par exemple une tôle 15 d'une carrosserie de véhicule, par l'intermédiaire d'une rondelle 16 et d'un écrou 17. La douille 14 comporte une bague intérieure 18 formant palier pour un arbre 19 de bras d'essuie-glace faisant saillie au delà du corps 1 et en appui, à son extrémité opposée, dans une portée borgne 20 formée dans le corps 1. La zone d'extrémité de l'arbre 19 comporte des cannelures 21 pour le montage d'un bras 22 d'essuie-phare maintenu en place par un écrou 23.

Monté à coulissement dans la chemise 7 est prévu un piston annulaire 24 portant d'une façon étanche contre la face interne de la chemise 7 mais comportant une cavité périphérique annulaire 25 communiquant, en position de repos, avec la canalisation d'amenée 9, et, par des trous radiaux 26, avec l'intérieur de la chambre 3. L'extrémité du piston 24 dirigée vers la paroi de fond 4 comprend, noyées dans sa masse, deux languettes élastiques metalliques diamétralement opposées, reperées 27, faisant saillie axialement vers l'extérieur et munies, au voisinage de leur extrémité libre, d'ouvertures dans lesquelles sont engagées les extrémités opposées d'une lame de bistable 28 de configuration générale en forme de losange, percée d'un trou central au travers duquel s'étend l'appendice 12, réalisée par exemple en tôle bleue de 0,1 mm d'épaisseur et capable de prendre deux positions stables à concavités inversées representées sur les Figures 1 et 2.

Sur l'extrémité opposée du piston 24 est montée une tête de piston 29, coaxiale à ce dernier, fermant, de ce côté, par une paroi d'extrémité 30, la cavité intérieure 31 du piston annulaire. La paroi du piston annulaire 24 est pourvue, immédiatement en avant de la face 30 de la tête 29, d'orifices radiaux 32 susceptibles d'établir une communication entre la cavité interne 31 et la périphérie de la tête 29.

Dans la cavité interne 31 du piston annulaire 24 est monté à coulissement un tiroir annulaire 33 comportant une chambre périphérique annulaire 34 s'étendant sur une partie de sa longueur. L'extrémité du tiroir 33 est épaissie radialement vers l'intérieur pour former un épaulement annulaire 35 susceptible de coopérer avec la face arrière 36 du disque 120. Cette extrémité du tiroir 33 est également prolongée par deux pattes diamètralement opposées 37 s'étendant en saillie en direction de la paroi frontale 4 du logement 2 et pourvues sur leurs faces internes en regard de fentes 38 formant deux arêtes axialement en regard entre lesquelles sont reçues les extrémités latérales opposées de la plaque de bistable 28 et servant à solliciter cette dernière dans l'une ou l'autre de ses deux positions stables à concavités opposées.

La tête 29 du piston 24 comporte un évidement ouvert 39 servant de logement à une extrémité d'une biellette 40 pourvue d'un galet 41 monté fou sur un axe transversal 42. L'autre extrémité de la biellette 40 est fixée sur l'arbre 19 du bras d'essuie-phares qui est pourvu localement, à cet effet, d'une zone molletée 43.

Dans la cavité évasée du logement 5 est montée, en étant bridée périphériquement par le couvercle 6, une membrane de pompe en élastomère 50 délimitant une chambre intérieure de liquide 51 communiquant avec l'extérieur par une canalisation 52 formée axialement d'une seule pièce avec le couvercle 6. Dans la cavité 51 est disposé un ressort hélicoïdal conique 53 prenant appui par son extrémité de plus grand diamètre contre le couvercle 6 et, par son extrémité de plus petit diamètre, contre une coupelle de reprise 54 profilée pour correspondre sensiblement à la forme d'extrémité de la tête 29 de piston lequel est donc sollicité vers la gauche, comme représenté sur les Figures 1 et 2, par le ressort 53 avec la membrane 50 plaquée entre la coupelle 54 et la tête 29 du piston 24.

Le fonctionnement du dispositif est le suivant: dans la configuration de repos représentée sur la Figure 1, l'équipage du piston est dans une première position extrême, sous l'effet de la force de rappel du ressort 53, c'est-à-dire avec l'équipage de piston déplacé vers la gauche et la chambre 51 de la pompe présentant un volume interne maximum. Dans ces conditions, les orifices radiaux 32 du piston annulaire 24 sont masqués intérieurement par l'extrémité droite du tiroir 33, dont les pattes 37 sont en butée contre la paroi de fond 4 du corps 1. Par contre, la chambre périphérique annulaire 25 du piston 24 communique avec l'orifice 8 de la chemise 7 tandis que les orifices radiaux 26 sont démasqués par l'extrémité gauche du tiroir 33, la lame bistable 28 ayant la première configuration représentée sur la Figure 1. Dans ces conditions, de l'air sous pression admis par la canalisation 9 pénètre dans la chambre 3 et la cavité 31 en agissant sur une surface de piston S amenant le déplacement de l'équipage mobile coulissant intérieur au boîtier 1 à se déplacer vers la droite à l'encontre de la force de rappel du ressort 53, en expulsant ce faisant, par la canalisation 52, le liquide contenu dans la chambre 51. Lorsque cet équipage arrive vers son autre position extrême de fin de course (vers la droite sur les Figures) le tiroir 33 vient en butée par son épaulement interne 35 contre le disque 120 ce qui a pour effet de le retenir en arrière par rapport au piston 24 en faisant ainsi basculer la lame bistable 28 dans sa seconde position stable représentée sur la Figure 2 correspondant à une configuration où le tiroir 33 n'occulte plus les orifices radiaux 32, permettant ainsi une décharge, via le clapet 10 et ses orifices 11, de la surpression à l'intérieur de la chambre 3 et de la cavité 31, tandis que les orifices radiaux 26, se trouvant, par contre, occultés par l'extrémité gauche du tiroir 33, le fluide sous pression de la canalisation 9 ne parvient plus dans la chambre 3. Une fois la décompression exercée dans cette chambre 3, la force de rappel du ressort 53 redevient prédominante, ce ressort rappelant l'équipage coulissant mobile vers la gauche. Lors de ce mouvement de retour, le tiroir 33 et le piston 24 occupent les mêmes positions respectives que précédemment et l'expansion du volume de la chambre 51 provoque l'aspiration dans cette dernière d'une nouvelle quantité de liquide destinée à être expulsée ultérieurement. Vers la fin de ce mouvement de retour, les pattes 37 du tiroir viennent en butée contre la face interne 44 du fond 4 du logement 2 tandis que le piston 24 poursuit son déplacement, ramenant ainsi la lame bistable 28 dans sa première configuration de la Figure 1, c'est-à-dire avec le tiroir 33 décalé vers la droite par rapport au piston 24, occultant ainsi de nouveau les orifices radiaux 32 et démasquant les orifices radiaux 26 pour permettre une nouvelle introduction d'air comprimé dans la chambre 3, le processus précédemment décrit se reproduisant ainsi automatiquement. Lors du déplacement alternatif de l'équipage de piston la biellette 40 provoque un déplacement angulaire alternatif de l'arbre 19 et donc le balayage du bras d'essuyage 22, tandis que la membrane 50 expulse périodiquement une quantitée mesurée de liquide vers un glicleur, comme on le verra par la suite.

On a représenté sur la Figure 4 une installation de lave-phares/ essuie-phares agencée autour de deux dispositifs 100 précédemment décrits. Comme on le voit sur cette Figure, les canalisations d'entrée 9 sont reliées à une source d'air sous pression R (par exemple un réservoir alimenté, via un déssicateur, par un compresseur du véhicule) par l'intermédiaire d'un distributeur 200 contrôlé par un dispositif de commande manuelle 300. Les canalisations d'amenée et de sortie de liquide 52 des dispositifs 100 sont reliées à des gicleurs a clapets anti-retour 400 au voisinage de la vitre de phare à nettoyer et, par un conduit 501 pourvu à son extrémité immergée d'un clapet anti-retour 502, à un réservoir de liquide de lavage 500 non nécessairement du type pressurisé.

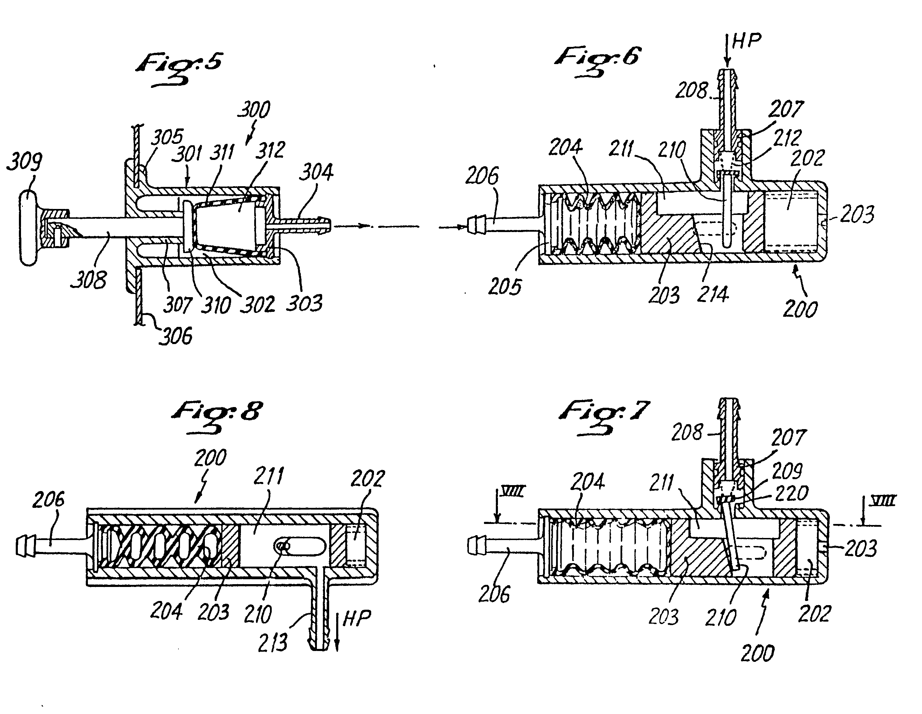

On a représenté sur les Figures 5 et 6 l'ensemble coopérant du dispositif de commande manuelle 300 et du distributeur 200 interconnectés par une liaison à fluide. Le dispositif de commande manuelle 300 comprend un boîtier 301 définissant une cavité interne 302 fermée à une extrémité par un couvercle 303 pourvu d'un raccord de canalisation à fluide 304, la paroi de fond du boîtier 301 formant une collerette 305 servant au montage du dispositif sur une paroi 306 d'un véhicule. La paroi de fond forme également une portée tubulaire interne 307 pour une tige d'actionnement 308 pourvue, à une extrémité, d'un bouton d'actionnement 309 et, à son autre extrémité, d'un plateau 310 coopérant avec une membrane en forme de cloche 311 bridée par sa périphérie entre le couvercle 303 et le corps de boîtier 301 et définissant une cavité de fluide 312.

Le distributeur 200 comprend un corps cylindrique 201 définissant une chambre interne 202 dans laquelle est monté à coulissement étanche un piston 203 dont une face externe est liée à un soufflet extensible 204 maintenu en place dans la cavité 202 par un couvercle 205 muni d'un raccord de canalisation à fluide 206. Le corps 201 forme également une extension latérale 207 dans laquelle est monté un raccord de canalisation d'entrée d'air sous pression 208 et définissant une chambre intérieure dont le fond, communiquant avec la chambre 202, forme un siège pour une tête de clapet 209 solidaire d'une tige 210 passant au travers de l'orifice de communication et s'étendant dans un logement ouvert 211 formé dans le piston 203, la tête de clapet 209 étant normalement maintenue plaquée contre son siège par un ressort 212 prenant appui contre l'extrémité interne du raccord 208. L'extrémité de la chambre 202 opposée au soufflet 204 communique avec l'extérieur par un orifice 204. Le logement 211 peut communiquer également avec un raccord de canalisation de sortie d'air comprimé 213 formé latéralement dans le corps 201. Le logement 211 du piston 203 comporte une surface de rampe interne 214 susceptible de coopérer avec la tige 210 du clapet 209.

En configuration de repos, représentée sur las figures 5 et 6, la membrane 311 du dispositif de commande manuelle 300 n'étant pas sollicitée, l'équilibre de pression entre la chambre interne 312 du dispositif de commande manuelle et le soufflet 204 maintient celui-ci en configuration non dilatée. Dans ces conditions, la tige 210 s'étend librement dans le logement 211 et la tête de clapet 209 porte en contact étanche contre son siège 220 sous l'effet du ressort 212, de sorte que l'air sous pression dans la canalisation 208 ne pénètre pas dans le logement 211, le raccord 213 étant isolée du logement 211. Si, par contre, l'utilisateur enfonce le bouton 309 du dispositif de commande manuelle 300, il s'ensuit un écrasement de la chambre 312 se traduisant par une expansion du soufflet 204, comme on le voit sur les figures 7 et 8, provoquant un déplacement vers la droite du piston 203 amenant la surface de rampe 214 à porter contre la tige 210 et à basculer celle-ci, soulevant ainsi la tête de clapet 209 de son siège 220 et permettant l'admission de l'air comprimé de la canalisation 208 dans le logement 211 et, de là, via la canalisation de sortie 213 vers les dispositifs 100 pour la mise en oeuvre de ces derniers et assurer ainsi, le temps du maintien de l'enfoncement du bouton 309, l'actionnement simultané des bras d'essuie-phares et la fourniture par les gicleurs de doses épisodiques de liquide de lavage. Dés que l'opérateur cesse d'enfoncer le bouton 309, le système revient dans sa configuration de repos des figures 5 et 6, c'est-à-dire avec le clapet 209 de nouveau plaqué en contact étanche contre son siège 220, la tige de clapet 210 redevenant libre dans le logement 211, la fourniture d'air comprimé aux dispositifs 100 étant interrompue, ces derniers venant réoccuper leur position de repos représentée sur la figure 1 sous l'effet des ressorts de rappel 53.

Quoique la présente invention ait été décrite en relation avec des modes de réalisation particuliers, elle ne s'en trouve pas limitée mais est au contraire suspectible de modifications et de variantes qui apparaîtront à l'homme de l'art.

**Revendications**

1. Installation combinée pneumatique d'essuie-vitres-/lave-vitres, caractérisée en ce qu'elle comprend un dispositif pneumatique d'actionnement de bras pivotant d'essuie-vitre, comprenant un moyen de vérin simple effet (24, 29) constitué d'une unité piston-cylindre, le piston se déplaçant contre l'action d'un ressort de rappel (53), le piston étant couplé au bras pivotant (22) et au moyen de piston (50) d'une pompe aspirante-refoulante de lave-vitres (5) utilisant le même ressort de rappel (53) pour engendrer l'aspiration de la pompe, le piston du moyen de vérin étant associé à un distributeur bistable (33, 28) de commande d'alimentation, actionné par le déplacement de ce piston au moyen de vérin (24, 29).

2. Installation selon la revendication 1, caractérisée en ce que le distributeur (33, 28) est intégré dans le moyen de vérin (24, 29).

3. Installation selon la revendication 2, caractérisée en ce que le distributeur comprend un tiroir annulaire (33) monté coulissant dans une cavité interne axiale (31) du moyen de vérin (24), lequel comprend des lumières radiales d'admission (26) et d'échappement (32) axialement espacées, le tiroir (33) étant relié au moyen de vérin (24) par un système bistable à lames élastiques (27, 28) susceptible de coopérer avec des butées stationnaires (36, 44) axialement espacées au voisinage des deux positions extrêmes de déplacement du moyen de vérin.

4. Installation selon l'une des revendication 1 à 3, caractérisée en ce que le moyen de vérin (24, 29) comprend un logement (39) dans lequel est reçue une extrémité d'une biellette (40) dont l'autre extrémité est solidaire de l'arbre (19) du bras pivotant (22).

5. Installation selon la revendication 4, caractérisée en ce que le dispositif d'actionnement est logé dans un boîtier (1) définissant une portée intérieure axiale de coulissement pour le moyen de vérin (24, 29) et une portée transversale de palier (14, 20) pour l'arbre (19) du bras pivotant (22).

6. Installation selon la revendication 5, caractérisée en ce que le boîtier (1) définit, dans le prolongement de la partie de coulissement (2) du moyen de vérin (24, 29), une cavité divisée par une membrane (50) constituant ledit moyen de piston de la pompe et définissant une chambre intérieure de liquide (51) dans laquelle est disposé le ressort de rappel (53) sollicitant la partie centrale de la membrane et faisant porter celle-ci contre l'extrémité adjacente du moyen de vérin (29).

7. Installation selon l'une des revendications précédentes, caractérisée en ce qu'elle comprend une source d'air sous pression et un réservoir de liquide de lavage (500), la partie de pompe (5) comprenant un orifice d'admission et de refoulement unique (52) connecté à une canalisation d'amenée (501), provenant du réservoir de liquide de lavage (500) et pourvue d'un clapet anti-retour (502), et à au moins un gicleur également pourvu d'un clapet anti-retour (400).

**Patentansprüche**

1. Kombinierte pneumatische Scheibenwisch- und -wascheinrichtung, gekennzeichnet durch eine pneumatische Betätigungsvorrichtung für den Schwenkarm des Scheibenwischers mit einem einfachwirkenden Stellmotor (24, 29), der von einer Kolben-Zylinder-Einheit gebildet wird, wobei der Kolben entgegen der Wirkung einer Rückholfeder (53) verschiebbar ist, der Kolben mit dem Schwenkarm (22) und dem Kolben (50) einer Pumpe (5) für die Scheibenwascheinrichtung unter Verwendung der gleichen Rückholfeder (53) verbunden ist, um den Ansaugvorgang der Pumpe hervorzurufen, wobei der Kolben des Stellmotors einem bistabilen Verteiler (33, 28) der Versorgungssteuerung zugeordnet ist, der durch die Verschiebung dieses Kolbens des Stellmotors (24, 29) betätigt wird.

2. Einrichtung nach Anspruch 1, dadurch gekennzeichnet, daß der Verteiler (33, 28) in den Stellmotor (24, 29) integriert ist.

3. Einrichtung nach Anspruch 2, dadurch gekennzeichnet, daß der Verteiler einen ringförmigen Schieber (33) aufweist, der in einem axialen Innenraum (31) des Stellmotors (24) gleitbar gelagert ist, wobei dieser radiale Einlaß- und Auslaßschlitze (26, 32) aufweist, die axial voneinander beabstandet sind, wobei der Schieber (33) mit dem Stellmotor (24) durch ein bistabiles System aus Blattfedern (27, 28) verbunden ist, die mit axial beabstandeten stationären Anschlägen (36, 44) in Nähe der beiden Endstellungen der Stellmotorverschiebung zusammenwirken.

4. Einrichtung nach einem der Ansprüche 1-3, dadurch gekennzeichnet, daß der Stellmotor (24, 29) eine Aufnahme (39) aufweist, in der ein Ende einer Kurbelstange (40) sitzt, deren anderes Ende mit der Welle (19) des Schwenkarmes (22) fest verbunden ist.

5. Einrichtung nach Anspruch 4, dadurch gekennzeichnet, daß die Betätigungsvorrichtung in einem Gehäuse (1) untergebracht ist, das einen inneren axialen Gleitbereich für den Stellmotor (24, 29) und einen querverlaufenden Lagerbereich (14, 22) für die Welle (19) des Schwenkarmes (22) bildet.

6. Einrichtung nach Anspruch 5, dadurch gekennzeichnet, daß das Gehäuse (1) in der Verlängerung des Gleitabschnittes (2) des Stellmotors (24, 29) einen Hohlraum bildet, der von einer Membran (50) unterteilt ist, die den Kolben der Pumpe bildet und eine innere Flüssigkeitskammer (51) bildet, in der die Rückholfeder (53) angeordnet ist, die den zentralen Abschnitt der Membran vorspannt und diesen gegen das angrenzende Ende des Stellmotors (29) anliegen läßt.

7. Einrichtung nach einem der vorhergehenden Ansprüche, dadurch gekennzeichnet, daß sie eine Druckluftquelle und ein Waschflüssigkeitsreservoir (50) enthält, wobei die Pumpe (5) eine einzige Auffüll- und Einlaßöffnung (52) aufweist, die mit einer von dem Waschflüssigkeitsreservoir (5) kommenden Einlaßleitung (501), die mit einem Rückschlagventil (502) versehen ist, sowie mit mindestens einer Düse verbunden ist, die ebenfalls mit einem Rückschlagventil (400) versehen ist.

**Claims**

1. A combined pneumatic wiper-washer installation, characterized in that it comprises a pneumatic actuating device for a pivoting wiper arm, comprising simple-acting servomotor means (24, 29) comprised of a piston/ cylinder unit, the piston being displaceable against the action of a return spring (53), the piston being connected to the wiper arm (22) and to piston means (50) of a washer pump (5) using the same return spring (53) for causing pump suction, the piston of the servomotor means being associated to a bistable distributor (33, 28) of a supply control system, which is actuated by displacement of said piston of the servomotor means (24, 29).

2. The installation of claim 1, characterized in that the distributor (33, 28) is integrated in the servomotor means (24, 29).

3. The installation of claim 2, characterized in that the distributor comprises an annular spool (33) slidingly mounted in an internal axial cavity (31) of the servomotor means (24), the latter comprising axially spaced radial inlet (261 and outlet (32) orifices, the spool (33) being connected to the servomotor means (24) by a bistable system of resilient leaves (27, 28) adapted to cooperate with axially spaced stationary abutments (36, 44) adjacent the two end positions of displacement of the servomotor means.

4. The installation of any of claims 1 to 3, characterized in that the servomotor means (24, 29) comprise a recess (39) for receiving one end of a crank arm (40), the other end of which is connected to the shaft (19) of the wiper arm (22).

5. The installation of claim 4, characterized in that the actuating device is situated in a casing (1) defining an internal axial sliding area for the servomotor means (24, 29) and a transverse bearing area (14, 20) for the shaft (19) of the wiper arm (22).

6. The installation of claim 5, characterized in that the casing (1) defines a cavity extending from the sliding area (2) of the servomotor means (24, 29) and divided by a diaphragm (50) forming said piston means of the pump and defining an internal liquid chamber (51), the return spring (53) being disposed therein and biasing the central portion of the diaphragm and causing the latter to engage the adjacent end of the servomotor means (29).

7. The installation of any of the preceding claims, characterized in that it comprises a pressure air source and a washer liquid reservoir (500), the pump (5) comprising a common inlet and refilling orifice (52) connected to a feeding line (501) extending from the washer liquid reservoir (500) and provided with a one-way valve (502), and to at least one nozzle also provided with a one-way valve (400).

0 094 862

*Fig: 1*

*Fig: 2*

*Fig: 3*

0 094 862

Fig.4

500
501
502
400
52
5
52
5
400
100
100
9
9
2
2
200
213
206
304
208
R
300

3

Fig.6

Fig.7

Fig.5

Fig.8